(19) **Europäisches Patentamt**

**European Patent Office**

**Office européen des brevets**

(11) Publication number: **0 266 228 B1**

(12) **EUROPEAN PATENT SPECIFICATION**

(45) Date of publication of patent specification: **03.06.92**  (51) Int. Cl.⁵: **B62D 25/18**

(21) Application number: **87309672.1**

(22) Date of filing: **02.11.87**

(54) **Spray suppression material and devices for road vehicles.**

(30) Priority: **31.10.86 US 926142**
**14.11.86 GB 8627319**
**14.03.87 GB 8706110**
**29.06.87 GB 8715220**
**30.10.87 US 115495**

(43) Date of publication of application:
**04.05.88 Bulletin 88/18**

(45) Publication of the grant of the patent:
**03.06.92 Bulletin 92/23**

(84) Designated Contracting States:
**AT BE CH DE ES FR GB GR IT LI LU NL SE**

(56) References cited:
**GB-A- 1 447 327**
**GB-A- 2 143 189**
**US-A- 4 382 606**

(73) Proprietor: **Sullivan, Patrick F.**
**3645 Glen Oak**
**Eugene, OR 97405(US)**

(72) Inventor: **Sullivan, Patrick F.**
**3645 Glen Oak**
**Eugene, OR 97405(US)**

(74) Representative: **Skerrett, John Norton Haigh et al**
**H.N. & W.S. SKERRETT Rutland House 148 Edmund Street**
**Birmingham B3 2LO(GB)**

EP 0 266 228 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to improvements in spray suppression material and devices for use adjacent the wheels of road vehicles for the purpose of reducing or suppressing the production of fine spray and formation of spray clouds by the vehicle when travelling at speed on wet road surfaces.

As is well known, when a road vehicle, for example a large truck or heavy goods vehicle, is moving at speed spray is produced by the interaction of the tyres of the road wheels with a wet road surface, liquids being picked up from the road surface and being thrown outwards and upwards by the tyres. Such liquids may originate as rain water, slush from snow, melting ice, mud and the like. Depending on various factors including speed, size and design of the vehicle, amount of surface water or slush on the roadway, wind conditions and road surface characteristics, this spray, especially when projected against a solid surface on the vehicle and deflected or spattered into smaller droplets which are likely to be caught in currents of turbulent air surrounding the vehicle, may form spray clouds of varying density which can seriously impair visibility both for other road users and for the rear vision of the driver of the spray-producing vehicle, leading to very hazardous driving conditions. This problem is moreover particularly serious with large heavy goods vehicles which nowadays commonly travel at high speeds in excess of 50 m.p.h. and, for this class of vehicle at least, minimum standards for the design and performance of spray control means are being more widely regulated in many countries by legislation.

The problem is not of course solved merely by providing shields such as conventional wheel guards, mudflaps or wheel valances having comparatively hard, planar surfaces designed to intercept and contain the water or other fluid matter such as mud and slush thrown up by the road wheels because when such water or fluid matter in the form of a coarse spray or large droplets is projected against such surfaces it tends to break up into very fine droplets which then become entrained and escape in surrounding currents of turbulent air still to generate the troublesome and hazardous clouds of fine spray referred to. Accordingly, in addition to providing structure designed to shield the road wheels and to contain the coarse spray or large droplets of liquid water or other fluid matter thrown up directly off the road surface, it is also necessary to provide spray suppression means comprising material or a device designed to absorb or dissipate the kinetic energy of such liquid or fluid matter in order to promote steady drainage and reduction of the aforesaid tendency for it to break up into fine spray. Such spray suppression material will generally form part of or be incorporated in shielding or containment devices such as wheel flaps (so-called "mud-flaps"), valances or side skirts, and wheel guards.

Various designs of spray suppression material and spray suppression devices, related especially to shielding and containment devices such as wheel flaps and valances, have already been proposed. Of these, however, a number are not able to meet the performance standards now required, while others, although perhaps capable of performing fairly well under ideal conditions, are prone to lose performance and to become ineffective under adverse conditions as a result, for example, of becoming readily clogged by mud or packed snow. Also, some designs can be relatively costly to produce and/or have other practical disadvantages so that there is considerable scope for further developments and improvements in this field, especially in respect of achieving a greater overall efficiency and performance characteristics.

Several known or previously proposed prior art designs of spray suppression material an d devices for use as vehicle spray suppressors or spray inhibitors have included a panel of sheet material having a spray-receiving surface formed with upstanding ribs or bars defining channels adapted to guide and control the flow of liquid from spray impinging on this surface so as to promote drainage without generating excessive spray. DE-A-1755262 (Blomberg) and US-A-4290619 (Goodall) for example envisage mudflaps having a ribbed surface providing vertically extending open flow channels. GB-A-2132148 (Netlon) and US-A-4382606 (Lightle et al) disclose mudflap designs in which a panel of sheet material is provided with a plurality of ribs or bars upstanding at right angles to the plane of the panel and having an inverted V-shape configuration symmetrically arranged in widely spaced parallel relationship about a vertical centreline to define wide channels of similar inverted V-shape opening out to drainage areas at the sides of the panel, and in the arrangement of the Lightle et al patent these channels contain densely packed rows of upstanding conical projections which are intended to increase the effective surface area but which in fact can inhibit drainage and are likely to become clogged.

Another arrangement is disclosed in GB-A 1447327 (Arenhold) in which a mudflap panel is provided with a number of transverse ribs running obliquely across the panel from one side edge to the opposite side edge and at the ends of these ribs which are at the higher level closer to the top of the panel the channels defined between the ribs are closed by a continuous vertical rib along the adjacent side edge of the panel. With this arrangement it was intended that the side edge provided with the continuous vertical rib should be the edge normally presented outwardly of the vehicle, and that all liquid from spray impinging on the mudflap should be guided and conveyed along the channels obliquely downwards across the panel to be discharged through the open lower ends of the channels at the side presented inwardly of the vehicle.

It has also been proposed in GB-A-2143189 (Dunlop), GB-A-2146598 (Uniroyal) and British Design Registration 1022999 (Uniroyal) to design a vehicle spray suppressor or mudflap in the form of a panel of sheet material having a ribbed spray-receiving surface defining a plurality of parallel collector channels extending rectilinearly in a horizontal direction across the width of the panel between drainage outlet channels along each side edge of the panel, these drainage outlet channels being at right angles to the horizontal collector channels and being intended in use to receive and contain spray liquid conducted laterally across the panel along the horizontal collector channels.

Several other prior art designs of spray suppression material and spray suppressor devices have included a spray receiving surface covered with a pattern of spaced-apart discrete elongate blade elements or flexible finger-like protuberances forming a spray suppressing configuration adapted to present an increased surface area to the coarse fluid spray thrown up by the road wheels so as to absorb or dissipate much of the kinetic energy therein, enabling the liquid water component to collect and drain relatively slowly through fluid collection and drainage paths defined between the protuberances.

In one particular example of the above-mentioned type of design, developed jointly by the present applicant and Russell R. Wakefield and disclosed in European patent specification No. 0134156A, a generally planar base surface of a spray suppression device in the form for instance of a mudflap is covered with a plurality of specially profiled elongate flexible fingers projecting outwardly at a small angle to the base surface and, except over a lower marginal area of the mudflap, these fingers are arranged in a uniform pattern of staggered columns of relatively densely packed overlapping rhombic shaped groups defining between these columns downwardly extending unobstructed zig-zag flow paths for liquid drainage.

In a further improvement, as disclosed in the Applicant's European Patent Application No. EU 0202059A of which the content is to be regarded as being incorporated herein, the concept has been introduced of providing a central zone of a generally rectangular base panel of spray suppression sheet material with a surface configuration designed primarily to promote efficient and rapid transfer of liquid or fluid matter away from said central zone into laterally adjacent marginal collecting zones or regions which are individually provided with a different surface configuration designed primarily to absorb or dissipate the energy of the liquid or fluid material in such a manner as progressively to reduce the velocity and deflect such liquid or fluid matter into drainage flow paths. For the latter purpose, a surface configuration provided by a pattern of spray control protuberances in the marginal collecting zones or regions was proposed in the form of spaced-apart discrete elongate projections, such as flexible finger-like projections formed and arranged as taught in EU 0134156A as already referred to, and in said central zone it was proposed that there should be a series of parallel ribs or bars of substantially rectangular cross-section projecting forwardly substantially at right angles to the plane of the base panel and extending transversely to define therebetween a series of parallel open-ended transverse flow channels of substantially rectangular cross-section adapted to convey liquid or fluid matter from said central zone towards the laterally adjacent marginal collection zones either side thereof. More specifically, in particular embodiments described in relation to a base panel of substantially rectangular shape intended to be oriented in a substantially vertical plane for use as a mudflap and having a central zone also of a rectangular shape bounded by adjacent upper, lower and side zones each covered with said spaced-apart discrete elongate projections providing spray-control protuberances in these areas, it was proposed that the parallel ribs or bars defining the transverse channels in said central zone should either be straight throughout their length so as to extend horizontally across the panel between the adjacent side zones or, alternatively, that either just the end portions of the ribs or bars adjacent the ends of the transverse channels should be inclined downwards towards the lower part of the panel or that the ribs or bars should be arcuately curved to some extent, especially adjacent their ends, so as to commence downwardly deflecting the flow of liquid or fluid along the channels therebetween in a direction towards the lower part of the panel as or before it exits the channels.

In all the embodiments described in the above-mentioned European Patent Application, however, it was also envisaged that the transverse ribs or bars would be symmetrically disposed with respect to the longitudinal median axis or centreline of the panel and would each extend either horizontally, parallel to upper and lower marginal edges of the panel, in the case of ribs or bars which are straight throughout their length or, in the case of ribs or bars having an arcuate form or angled end portions, would extend in a generally horizontal direction across the central zone with their ends directed obliquely downwards in the direction of the lower marginal edge of the panel.

The present invention is based on the fact that it has now been found, somewhat surprisingly, that it can be advantageous and a greater efficiency can be obtained if, in arrangements similar to those disclosed in said European Patent Application EU 0202059A, such transverse ribs or bars provided in at least the central zone of the panel are arranged to slope obliquely upwards across the panel throughout at least a major portion of their length and/or to slope obliquely upwards and outwardly away from the surface of the panel as seen in cross-section. At least the feature of the transverse ribs or bars in a central zone of the panel being arranged to slope obliquely upwards across the panel throughout at least a major portion of their length also constrasts with the arrangements disclosed in the aforesaid patent specifications GB-A-2143189 and GB-A-2146598.

More specifically, the present invention, as claimed, provides spray suppression material, for use as or in a device fitted to a road vehicle for reducing the production of clouds of spray when travelling at speed on wet road surfaces, comprising a base provided by a panel of planar sheet material having a spray receiving surface, that is a surface which in use is presented towards a road wheel of the vehicle, said panel being bounded by a top edge, a bottom edge and opposite side edges and being provided with a series of forwardly projecting parallel ribs or bars which extend in a transverse direction across said surface and define therebetween a series of parallel open-ended transversely extending channels that in use provide passages for liquid or fluid matter from wheel spray impinging on said surface to flow towards said side edges of the panel and into laterally adjacent marginal collecting regions from where said liquid or fluid matter can drain away, said ribs or bars, and the flow channels defined therebetween, throughout at least a major portion of their length in at least a central zone of the panel, sloping obliquely across said surface of the panel, and at least one said marginal collecting region being bounded by a vertical rib projecting forwardly from the base panel and having a depth greater than the depth of said transversely extending ribs or bars characterised by the following features in combination:

(a) the channels provide clear unobstructed passages for flow of the spray liquid or fluid over the surface of the panel from said central zone towards said marginal collecting regions.

(b) the transversely extending ribs or bars defining said channels over at least a major portion of their length extend in an upwards sloping direction obliquely across the surface of the panel at an angle within a range of 12° to 17° to a horizontal transverse axis of the panel, and are arranged to direct at least the majority of said liquid or fluid matter from wheel spray impinging on said surface in said central zone to flow upwards to a higher level during its passage along said flow channels to reach a said marginal collecting region, and

(c) the depth of said vertical rib or ribs is at least double the depth of said transversely extending ribs or bars so as to form a vertically extending retaining wall or walls presenting a spray suppressing surface effective to contain liquid or fluid matter conveyed along said flow channels into said marginal collecting region and to direct the flow of such liquid or fluid matter into an adjacent vertically extending drainage path.

In some embodiments the forwardly-projecting vertical rib or ribs providing said retaining wall or walls can advantageously be inclined in cross-sectional profile so as to slope inwardly at a substantial angle, for example 70°-75°, to the general plane of the base panel.

Preferably, the transverse ribs or bars will extend progressively upwards throughout their length, e.g. by extending obliquely in an upwardly sloping or inclined direction, throughout the entire width of a central zone so that they terminate at their one end at a higher level closer to the top edge of the panel than at their opposite end, and the transverse flow channels defined between the adjacent ribs or bars likewise slope upwards, in a direction from one side edge towards the upper edge of the panel, across the width of the central zone.

With the transverse ribs or bars and flow channels therebetween sloping upwardly across a central zone as referred to above, the central zone itself is also preferably offset laterally with respect to the longitudinal median axis or centreline of the panel so that a laterally adjacent marginal collecting zone or region, preferably that at the side of the panel adjacent the ends of the ribs or bars and transverse channels that terminate at the higher level, is wider than the marginal collecting zone or region at the opposite side of the panel. Moreover, in use, such spray suppression material and devices such as mudflaps incorporating the same are advantageously fitted to the vehicle concerned so that the longitudinal median plane of the panel extends in a longitudinal vertical plane of the vehicle with the ends of the ribs or bars and transverse channels that terminate at the higher level being presented inwardly of the vehicle such that if any of the water collected flowing up the transverse channels escapes without being caught and drained through the laterally adjacent marginal collection zone or region, it will be thrown under the vehicle rather than outwards to one side of the vehicle.

It is believed that an improved performance of spray suppression material and devices of the form mentioned above in accordance with the present invention results at least in part from the fact that most of the fluid or water in the primary spray caught up and flung out by the wheels of a vehicle on a wet road surface is, in general, thrown off tangentially by the wheels and is already travelling in an upwards direction when it impinges on the spray-receiving surface of the suppression material so that, even although drainage in a downwards direction is ultimately required, it is easier initially to collect and retain the fluid or water from this spray in flow channels having surfaces that extend upwardly to some extent in the same direction as the spray, thereby laterally to divert or direct the flow in a more gradual manner, generally towards a side collecting zone.

The transverse ribs or bars may have a substantially rectangular cross-section with substantially parallel side faces and may be straight throughout at least most of their length. If desired, however, they could be of slightly arcuate form, arranged for example to curve upwards at a progressively increasing angle, within the above-mentioned range of 12° to 17°, across the central zone.

Also, they could even be formed to include one or more changes in angular direction providing a bend or bends along their length, and in one embodiment the transverse ribs or bars, preferably sloping upwards in cross-section, may even be of shallow V-form, inverted V-form, or W-form, so that different sections thereof slope obliquely upwards across the panel with different inclinations whereby some of the liquid which flows along the channels when in use may be subject to one or more changes of direction and enhanced reduction in kinetic energy even before reaching a laterally located marginal collection zone.

The transverse ribs or bars will usually be continuous along their length but if desired they may be interrupted by one or more short gaps which would allow communication between adjacent channels and thereby enable excessive water or fluid collected in one channel to escape by passing into the next channel without disturbing the overall lateral guiding function on the main flow, and some of such gapped sections could if desired be staggered relative to one another in the vertical direction.

In addition to extending obliquely across the width of the panel in said central zone in preferred embodiments, the transverse ribs or bars also preferably have a cross-sectional form such that, assuming the base panel is oriented in a substantially vertical plane, they also slope outwards away from the spray-receiving surface of the base panel, most preferably in an upwards direction as already referred to, and in this case each rib or bar, as viewed in cross-section, has at least a lower side face sloping outwards away from the general plane of the base panel in an upwards direction towards the top edge of the panel. However, if desired, in other embodiments where the transverse ribs or bars extend obliquely across the width of the panel, or central zone thereof, the cross-sectional form of the transverse ribs or bars may be such that they, or at least their lower side faces, slope outwards of the panel in a downwards direction, i.e. in a direction towards the bottom edge of the panel. In all cases, in preferred embodiments, the side faces of the transverse ribs or bars will be substantially parallel and will slope in cross-section at an angle within a range of about 20 to 30°, for example an angle of about 24-25°, to an axis or line perpendicular to the plane of the base panel.

In some useful embodiments of the invention the previously mentioned spaced-apart discrete elongate projections provided in the marginal collecting zones laterally adjacent the central zone containing the transversely extending bars or ribs and flow channels may even be omitted altogether and the area of this central zone may extend over substantially the full height or depth of the panel between top and bottom edges and/or over substantially the full width of the panel.

In embodiments where the marginal collecting zone or region at at least one side of said central zone is provided with said spaced-apart discrete elongate projections, these projections are preferably in the form of flexible fingers of frusto-conical tapering form which, as in the arrangement disclosed in EU 0134156A, may each terminate in a substantially hemispherical tip and have a height at least 2.5 times as great as their maximum diameter at their base, advantageously with a central axis inclined to the plane of the base panel in a median plane perpendicular to the plane of the base panel and parallel to the side edges of the latter so as to slope in substantially parallel relationship at the same or at a similar angle to the slope in cross-section of the transverse ribs or bars in the central zone. These flexible fingers are, moreover, preferably arranged in a regular predetermined pattern of rows and columns which may vary in density to provide a basic pattern of geometric groups defining the drainage flow paths as disclosed in EU 0202059A. The pattern of fingers over substantially the whole area of the base panel outside said central zone may advantageously be the same as that described in EU 0134156A and EU 0202059A, i.e. a series of staggered vertical columns of rhombic groups except in a lower marginal area of the panel where the fingers are arranged in a pattern of lower density staggered horizontal rows in order to reduce further any tendency for retention of solid matter from mud or snow and ice in this lower region.

In addition to the above-mentioned spaced-apart discrete elongate projections in the form of flexible fingers of frusto-conical tapering form being provided, or even where such finger-like projections are omitted altogether, if desired short bars or blade-like projecting elements extending obliquely downwards towards the adjacent side edge of the panel may be provided adjacent the open ends of the flow channels so as to assist in diverting and deflecting laterally flowing liquid exiting from these channels into the downwardly extending drainage paths in the marginal collection zones or regions.

In preferred embodiments the spray suppression material is manufactured in one piece as a unitary structure, advantageously as a moulding of firm but flexible material such as rubber or a suitable plastics material, with different zones containing different surface configurations or patterns of spray control protuberances being integrally incorporated therein.

Also, in preferred embodiments a forwardly projecting reinforcing rib is provided along or adjacent each side edge of the base panel which rib may extend vertically for substantially the full height of the base panel. At least at one side, especially where the ends of the transverse ribs or bars and the channels therebetween at that side terminate at a higher level closer to the top edge of the panel, such reinforcing rib preferably has a depth (as measured outwardly from the general plane of the base panel) substantially greater than the corresponding depth of the transverse ribs or bars, thereby to provide a relatively deep retaining wall, boundi ng the marginal collecting zone or region at that side, effective to contain liquid or fluid matter which is conveyed along the transverse flow channels and which manages to reach this boundary region. For this purpose, in some embodiments such vertically extending reinforcing rib or ribs can advantageously be inclined in cross-sectional profile so as to slope inwardly at an angle, for example 70°-75°, to the general plane of the base panel. Alternatively, in some other embodiments, one or each marginal collecting zone or region may be bounded laterally by a deep, vertically-extending rib forming a retaining wall located inwardly of the adjacent extreme side edge of the panel and inwardly of and spaced from a shallower vertical reinforcing rib extending along said extreme side edge. Or, in yet other arrangements, at least the one marginal collecting zone or region adjacent the ends of the transversely extending ribs or bars, may be bounded laterally by a separately formed C-shaped channel section member secured to the base panel and located inwardly of the adjacent extreme side edge, this channel section member being adapted to provide both a retaining wall and an open drainage channel extending in a direction downwards towards the bottom edge of the panel.

In utilising the spray suppression material of this invention it will generally be incorporated in or made up into spray suppression devices such as wheel flaps and valances adapted to be fitted to a vehicle so as to extend in a substantially vertical plane adjacent the road wheels thereof or so as to follow the general contour of wheel arches or mudguards (fenders). The invention also embraces wheel flaps, valances and like devices, even mudguards (fenders) themselves, incorporating or comprising the spray suppression material or spray suppression surface configuration herein specified.

In some embodiments of the invention, a shallow, forwardly-projecting ridge, e.g. of inverted V-shape or convex cross-section, may be provided in the space between adjacent ones of the sloping transverse ribs or bars, that is, in the base of the transverse fluid flow channels defined between adjacent ribs or bars, as disclosed in EU 0202059A, so that spray droplets striking the sloping surfaces of the ridge are deflected and splashed towards the adjacent surfaces of the forwardly-projecting ribs or bars rather than being splashed outwards away from the spray receiving surface. These ridges may extend the entire length of the channels between the parallel forwardly-projecting ribs or bars, or may extend only along the central portions of these channels, intermediate the opposite end portions.

A top marginal portion of wheel flaps in accordance with the invention may conveniently include a flared-out area which can be engaged by a downwardly open V-shaped support channel for use in mounting on the vehicle.

Also, in mud-flaps representing preferred embodiments of the present invention, a joint, e.g. a lap joint, may extend horizontally across the face of the flap, permitting replacement of the bottom section of the flap and facilitating production of similar flaps of a standard width but different lengths, as also disclosed in EU 0202059A.

Further features and advantages of the invention will become apparent from the following more detailed description of embodiments of the invention illustrated, somewhat diagrammatically in the accompanying drawings.

In said drawings:
FIGURE 1 is a rear portion of a truck equipped with a spray suppressant flap constructed according to the present invention;

FIGURE 2 is a front elevational view of one form of the spray suppressant flap shown in FIGURE 1;

FIGURE 3 is a fragmentary cross sectional view, on an enlarged scale, of the flap shown in FIGURE 2 taken along line III-III;

FIGURE 4 is a fragmentary cross sectional view, similar to that of FIGURE 3, taken along line IV-IV of FIG URE 2;

FIGURE 5 is a fragmentary cross sectional view on line V-V of FIGURE 2;

FIGURE 6 is a side elevational view of the top marginal portion of the flap shown in FIGURE 2 fitted to a vehicle;

FIGURE 7 is a front elevational view of a spray suppressant mudflap for heavy goods vehicles according to a second embodiment;

FIGURE 8 is a cross sectional view on line VIII-VIII of FIGURE 7;

FIGURE 9 is a fragmentary cross sectional view on line IX-IX of FIGURE 7;

FIGURE 10 is a view similar to FIGURE 7 illustrating a modification thereof;

FIGURE 11 is a cross sectional view on line XI-XI of FIGURE 10;

FIGURE 12 is a view similar to FIGURE 7 illustrating a further modification;

FIGURE 13 is a cross sectional view taken on line XIII-XIII of FIGURE 12;

FIGURES 14 and 15 are fragmentary cross sectional views corresponding to FIGURES 3 and 4 illustrating a further modification;

FIGURE 16 is another fragmentary cross sectional view similar to FIGURE 3 showing another modification;

FIGURE 17 is a fragmentary sectional view, on an enlarged scale, showing the manner in which a lap-joint may be provided between upper and lower sections of a flap such as the flap shown in FIGURE 2; and

FIGURES 18, 19 and 20 are views similar to FIGURES 7, 8 and 9 illustrating a further embodiment.

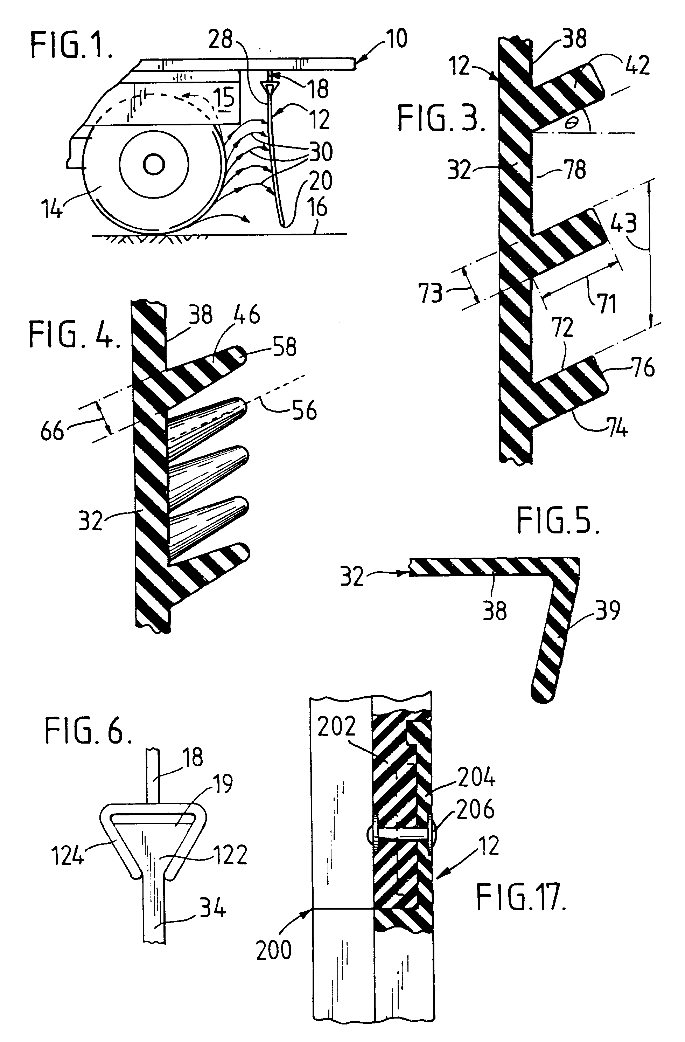

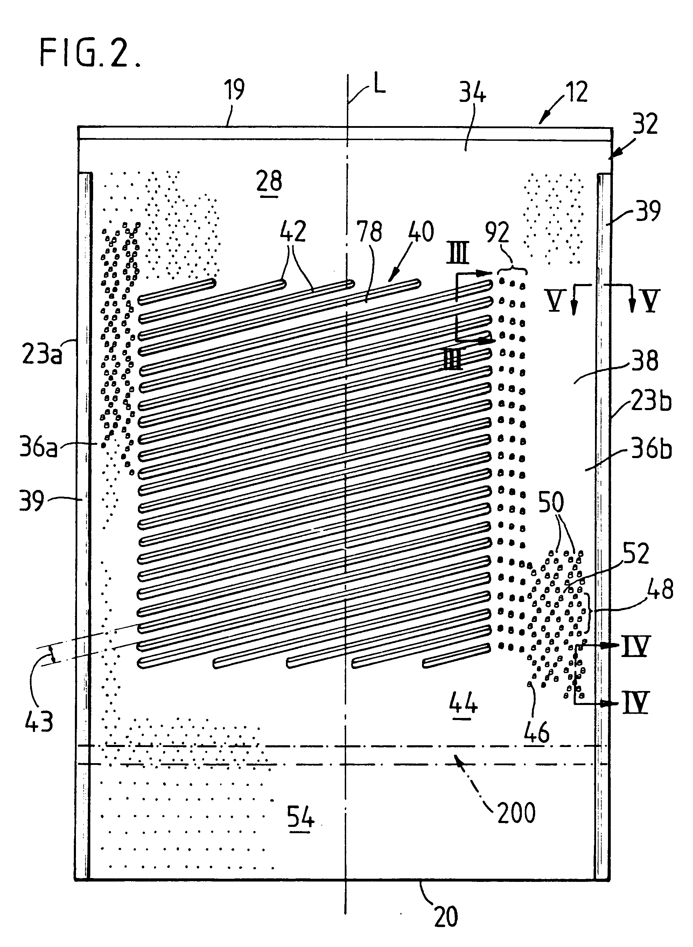

Referring now to the drawings, FIGURE 1 illustrates generally a truck or heavy goods vehicle 10 equipped with a spray suppressant flap 12 hanging vertically and located rearwardly with respect to its wheels 14, together with a similar side skirt or valance 15 located alongside the wheels 14, to receive and coalesce fluid droplets thrown up as spray from the wheels 14 or other surfaces as the vehicle 10 travels at speed on a wet road surface 16. The flap 12 is suspended from hanger 18 secured to the vehicle body so that the bottom edge 20 of the flap is spaced a short distance above the road surface 16.

As the vehicle 10 moves along the wet road surface 16, the major proportion of spray droplets thrown up from the wheels 14 typically impinges against the front face 28 of the flap 12 above mid height, travelling along paths similar to those indicated by the arrows 30.

Referring now to FIGURES 2 to 6 of the drawings, spray suppressant flap 12 illustrated therein in accordance with the present invention comprises a base panel 32 of generally rectangular shape composed of generally planar sheet material thick enough to be suitably rigid and heavy, and its front face 28 i.e. the face which is ordinarily presented toward the wheels of the vehicle to which it is fitted in use constitutes a spray-receiving surface. As shown in FIGURE 2, the base panel 32 includes a top marginal region 34 adjacent a top edge 19, laterally located marginal regions 36a, 36b, adjacent respective opposite side edges 23a, 23b, a bottom edge 20, and a generally flat base surface 38. Forwardly projecting ribs 39 extending generally vertically in a longitudinal direction along the side edges 23a, 23b, of the flap 12 bound the lateral marginal regions 36a, 36b. The ribs 39 add stiffness to the base panel 32, should it be made of a very flexible material, and provide retaining walls serving to contain lateral flow of liquid and to direct it downwards over the base surface 38, as will be explained more fully subsequently. In this preferred embodiment, each rib 39 is inclined inwardly of the panel at an angle of about 70°-75° to the base surface 38 as seen more clearly in FIGURE 5.

The base sheet or panel 32 includes a spray-suppressing first area 40 defining a central zone of generally rectangular shape which is located where the heaviest incidence of liquid droplets is generally to be expected and which, in this embodiment, is offset laterally to some extent in relation to the longitudinal median axis or centre line L of the panel or sheet 32. This location, which for a normal flap installation is closer to the top edge 19 of the panel 32 than to its bottom edge 20, results in the left-hand lateral marginal region 36a being narrower than the opposite right-hand lateral marginal region 36b. This spray-suppressing first area or central zone 40 includes a group of parallel, forwardly projecting transverse ribs or bars 42, molded integrally with the base panel 32 of the flap 12 and of the same material, extending obliquely from left to right in an upwardly inclined direction at an angle of about 14°-16° to the horizontal as shown in FIGURE 2. These ribs or bars 42 are provided for the purpose of initially catching and coalescing the drops of spray impinging on the face 28 during use and for conducting the liquid therefrom laterally towards the lateral marginal regions 36a, 36b in transverse flow channels 78 defined therebetween. A vertical spacing 43 between corresponding parts of adjacent bars 42 is preferably just less than about 0.75 inch (1.9 cm), although a spacing 43 in the range of 0.5 inch to 1.0 inch (1.3-2.5 cm) could be used.

Surrounding the spray-suppressing first area or central zone 40 is a spray-suppressing second area 44 of the flap 12. The second area 44 includes at least the major portions of the left and right lateral marginal regions 36a and 36b, and is characterised by a plurality of upstanding flexible fingers 46, projecting outwardly from the base surface 38, which are distributed over this second area 44, these fingers 46 for the most part being arranged in a preferred pattern consisting of a plurality of diamond-shaped rhombic groups 48, each including eight of the fingers 46. For clarity, many of the individual fingers 46 and groups 48 are omitted or are shown only as dots in FIGURE 2, but vertically adjacent ones of the diamond-shaped groups 48 overlap one another so that one finger 46 forms the end of each of two adjacent groups 48. (The pattern of the groups 48 may also be thought of as single fingers 46 located between vertically adjacent hexagonal groups of six fingers 46). The adjacent overlapping rhombic groups 48 of fingers 46, as viewed in FIGURE 2, are arranged as parallel columns or vertical rows 50 of groups 48. The rows 50 define flow paths 52 along the base surface 38 between the rows 50, the groups 48 in each row 50 being offset longitudinally with respect to the groups 48 in adjacent rows 50 so that, as may also be seen in FIGURE 2, the flow paths 52 are of a zig-zag, rather than straight, configuration. The flow paths 52 extend generally vertically so as to promote drainage of liquid downwardly over the spray-suppressing second area 44 of the base sheet 32 when it is hanging on a vehicle suspended by an attachment along its top edge 19.

A spray-suppressant third, or lower marginal, area 54 of the base sheet or panel 32 includes similar fingers 46 on the base surface 38 arranged in a pattern which is generally more open than the grouping pattern in the second area 44, giving additional unobstructed space between the fingers 46. Such third area 54 may extend over the bottom 3 inches (7.6 cm) of the flap 12, for example, and is provided in order to enhance shedding of snow or ice where accumulation of the latter is otherwise likely to be heaviest.

As seen most clearly in the vertical sectional views of FIGURES 3 and 4, the ribs or bars 42 and the individual fingers 46 are upwardly inclined, although parallel with one another, at an angle ($\theta$) about 24-25° (in this embodiment) away from being perpendicular to the generally planar base surface 38 of the base panel 32 of the flap 12. The fingers 46 are tapered and generally circular in cross section. Each has a central axis 56 and a generally frusto-conical outer surface with a hemispherical tip 58 (see FIGURE 4).

Each finger 46 is tapered, for example from a diameter 66 (at its base) of approximately 3/16 inch (0.47 cm) to a tip diameter of about half the base diameter, with the tip 58 being generally hemispherical. Each finger 46 has a length which is preferably at least about 2.5 times as great as its diameter at its base, so that it is independently flexible along its length in order to promote shedding of ice and to provide a large or additional surface area. For example, the fingers 46 may preferably be about 1/2 inch (1.3 cm) in length and may project forwardly from the base surface 38 to about the same extent as the ribs or bars 42.

The bars 42 are, in this preferred embodiment of the invention, generally rectangular in cross section and have a forwardly-projecting depth 71 of about 1/2 inch (1.3 cm), and a thickness 73 of about 3/16 inch (0.47 cm), as may be seen best in FIGURE 3. FIGURE 3 shows, in section, a portion of the flap 12. Each bar 42 has an upper side face 72 and a lower side face 74 which are generally parallel with each other. A front edge surface 76 lies perpendicular to the upper surface 72, and the bars 42 are upwardly sloped as previously stated at an angle of about 24°-25°, i.e. substantially parallel with the central axes 56 of the fingers 46.

This configuration provides the transverse channels 78 between adjacent bars 42 extending obliquely at the angle of about 14°-16° over the central zone 40. In use, spray received against the spray-suppressant first area or central zone 40 of the flap 12 is initially caught between the bars 42 and is guided to flow laterally, along the inclined channels 78 between bars 42, towards the lateral marginal regions 36a, 36b which may be termed marginal collecting regions. As the liquid exits from the channels 78 it encounters the groups of fingers 46 in these lateral marginal regions. In practice it is found that most of the liquid will flow upwards and exit into the right-hand lateral marginal region 36b which is wider than the marginal region 36a and which contains a greater number of rows or columns 50 of complete or partially complete rhombic groups 48 of the fingers 46.

It will be seen from FIGURE 2 that in this embodiment there are also additional groups 92 of projections, each consisting of a downwardly inclined row of three fingers 46 in rectilinear alignment, provided immediately adjacent the ends of the ribs or bars 42 and channels 78 at the right-hand side, just to the left of the rows or columns 50 of finger projections 46 in the right-hand laterally adjacent marginal collecting region 36b. This arrangement of the fingers 46 including the groups 92 serves to slow the lateral movement of liquid, absorbing kinetic energy and promoting diversion of the liquid by gravity and wind so that it tends to flow and drain relatively smoothly through the open drainage paths 52, thereby suppressing or reducing the production of hazardous spray. Instead of the groups 92 of fingers 46, short blade elements preferably of slightly arcuate form could be provided closely adjacent the open ends of the channels 78 for the same purpose of commencing to deflect the laterally flowing liquid downwards.

The distance between the central axes 56 of the closest adjacent fingers 46 within each diamond-shaped rhombic group 48 is preferably about 1/4 inch (0.6 cm), giving each said group 48 a width of 1/2 inch (1.3 cm) between the central axes 56 of the opposite corner fingers 46, and each clear drainage path 52 preferably has the same width. Thus, less than half of the area 44 of the flat base surface 38 is occupied by the fingers 46 even where the density of these fingers is greatest.

As previously indicated, when the flap 12 is fitted to a vehicle the narrower left-hand marginal collection region 36a should be on the outside and the main flow of liquid from wheel spray intercepted by the flap will be upwardly along the flow channels 78 to the wider right-hand marginal collection region 36b where the transverse ribs or bars 42, and channels 78 defined therebetween, terminate at the higher level closer to the top edge 19 of the panel than at their opposite ends, i.e. in a direction towards the underside of the vehicle. It will be appreciated that the flap 12 is therefore "handed" and a corresponding flap intended to be fitted to the opposite side of the vehicle will preferably be a mirror image of that illustrated.

For attaching the flap 12 to the vehicle 10, as shown in FIGURE 6 the base panel 32 is conveniently formed along the top edge 19 with an outwardly flared portion 122 of dovetail cross-section which is received in an open V-shaped channel section 124 of the hanger 18 which is secured to the vehicle.

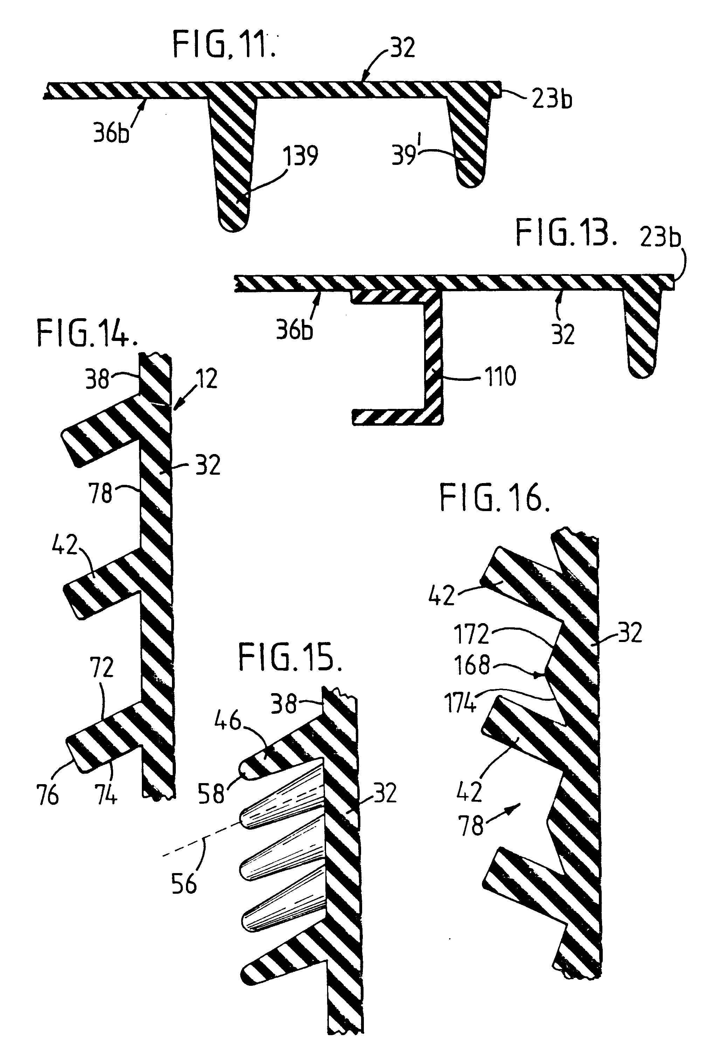

Many modifications and alternative arrangements may of course be incorporated within the scope of the invention. As already mentioned, the base surface within the transverse flow channels 78 may, if desired, be formed with a shallow ridged profile as described and illustrated in connection with the embodiments of FIGURES 12 to 19 of EU 0202059A and as herein illustrated in cross-section in FIGURE 16 which shows, by way of example, a shallow ridge 168 providing sloping surfaces 172 and 174 forming the base of a channel 78 between adjacent transverse ribs or bars 42.

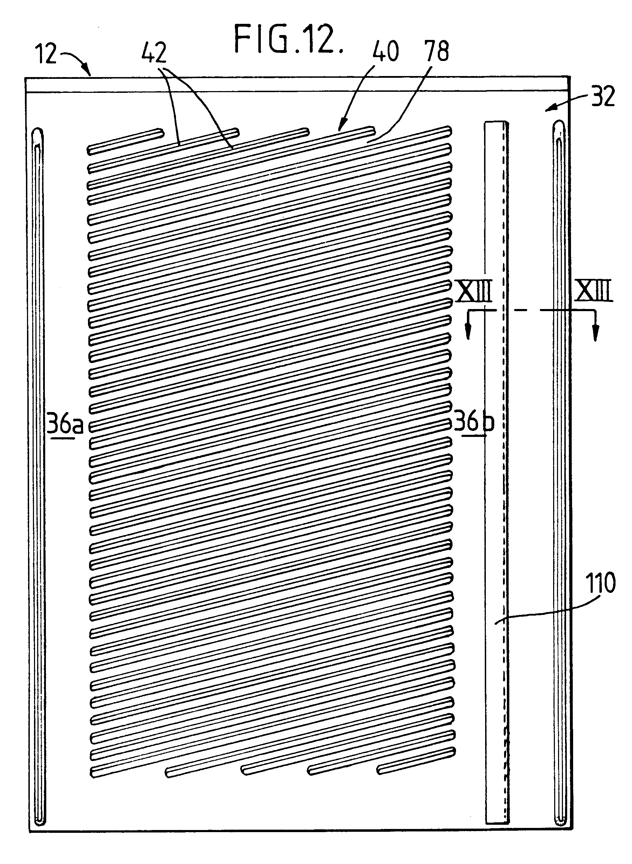

Also, the bottom section of the flap 12 including the lower marginal area 54 may be formed as a separate piece connected to the top section constituting the remainder of the flap by a joint 200 extending horizontally. FIGURE 17 shows an example of this arrangement wherein the joint 200 is a lap joint with overlapping portions 202 and 204 of the top and bottom sections of the flap respectively connected together by a plurality of fasteners such as bolts or rivets 206. As previously indicated, this can be useful for enabling the bottom section to be replaced independently of the rest of the flap in the event of damage, and it may also facilitate production of flaps of different length.

In another modification (not illustrated), as already mentioned, the transverse ribs or bars 42 may be interrupted by one or more short gaps along their length permitting some degree of communication between adjacent channels, and the gapped sections may also be staggered relative to one another in a vertical direction.

Although it is presently preferred that the side faces 72 and 74, or at least the lower side faces 74, of the transverse ribs or bars 42 should, as seen in cross-section, be inclined or slope upwardly away from the perpendicular to the general plane of the base panel as already described, if desired this inclination may be reversed so that these faces slope downwardly, in which case the finger projections 46 in at least the adjacent marginal collecting zones 36a, 36b will also preferably slope downwards. This is illustrated by way of example in FIGURES 14 and 15 where the same reference numerals are used to indicate the same parts as before. Also, as mentioned, the sloping ribs or bars 42 may if desired be of shallow arcuate form rising progressively upwards across the central zone 40 instead of being straight throughout their length.

In other embodiments the central zone 40 may cover a greater or a lesser area of the surface 38 of the base sheet or panel 32 than that illustrated in FIGURE 2, and in particular it need not necessarily be offset towards one side as previously described. Also, many variations are possible in the form, distribution and pattern of the projections in the area 44. In some cases, for example, it may be preferred to provide these projections in the form of a pattern of short bars or blades, straight or curved, of random lengths and orientation to absorb the energy of the spray liquid and to define tortuous drainage paths in the areas around the central zone 40.

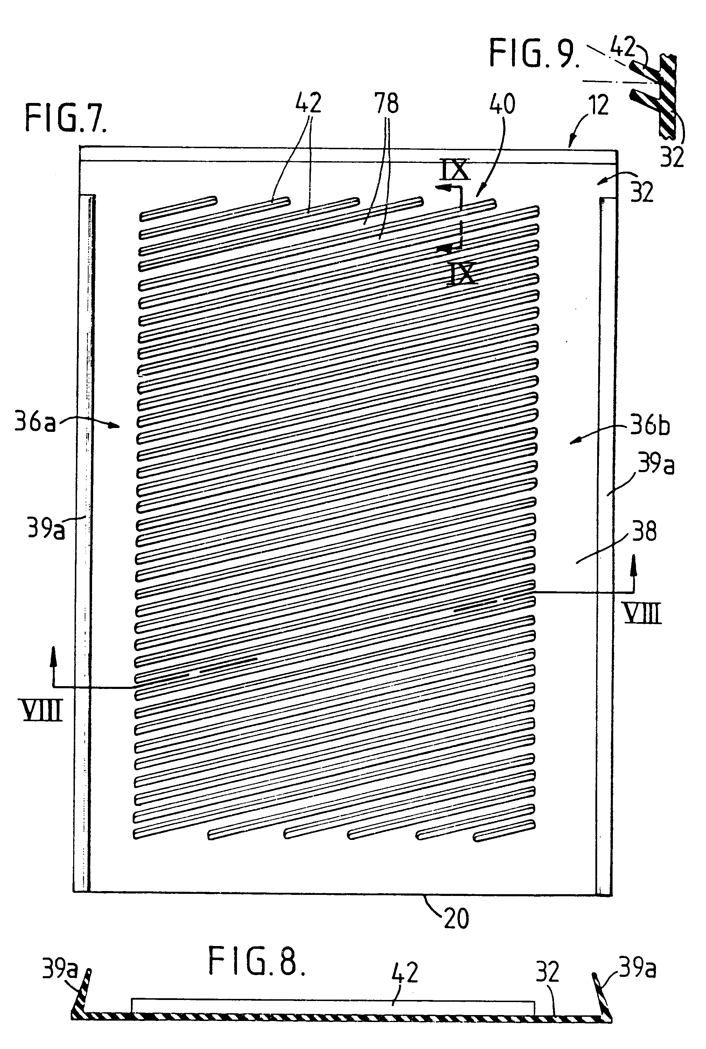

In some cases, however, the projections such as the projecting flexible fingers 46 may be omitted altogether, and the sloping pattern of transverse bars or ribs defining the sloping transverse flow channels 78 therebetween may cover substantially the entire area of the front face 28 of the panel 32. This is illustrated by way of example in the embodiment of FIGURES 7 to 9 which comprises a spray suppressant mudflap 12 similar to that described in connection with FIGURE 2 except that the sloping transverse ribs or bars 42, which define therebetween the inclined transverse flow channels 78, cover an area defining a central zone 40 that now extends for substantially the full height of the rectangular panel formed by the base sheet 32 and across a greater width of the panel, and the projecting flexible fingers previously provided in the marginal regions surrounding this central zone are now omitted. Additionally the vertically extending reinforcing ribs, here designated 39a, adjacent each side edge 23a, 23b, of the panel 32 are now shown to have a substantially greater depth (e.g. possibly of the order of 2″, i.e. 50.8 cm, or more), considerably greater, e.g. 3 to 4 times greater, than the depth of the ribs or bars 42. In cross-section these ribs 39a again slope inwardly as best seen in FIGURE 8, and they function not only to reinforce and stiffen the panel 32 but also they provide walls adapted to contain the liquid conducted into the side marginal regions 36a, 36b, wherein there is free unimpeded drainage over the generally flat surface 38 of the base sheet 32 to the lowermost edge 20 of the flap.

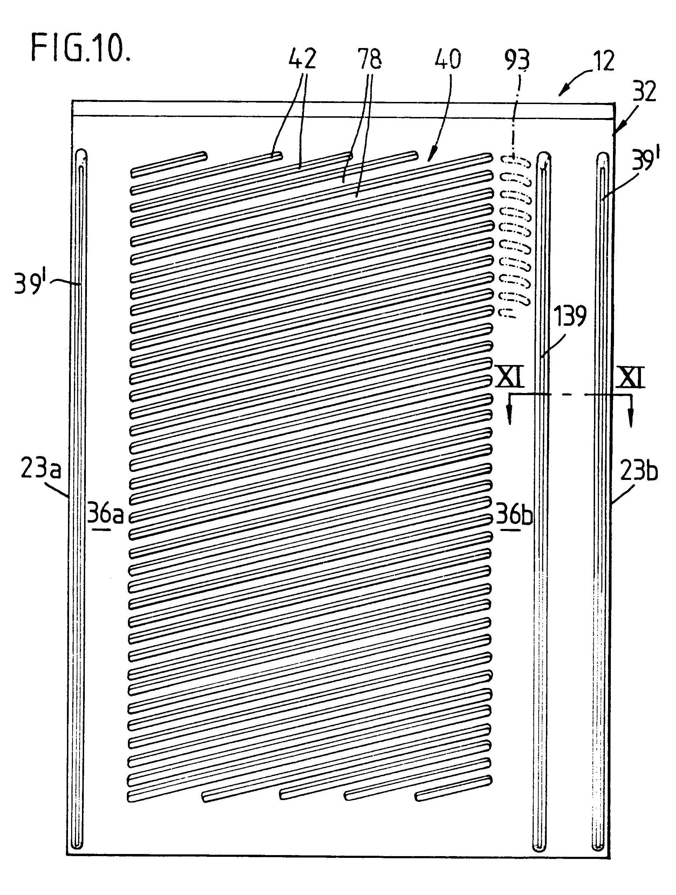

In the modification illustrated in FIGURES 10 and 11, again the projecting flexible fingers 46 previously provided are omitted and the integrally moulded transverse ribs or bars 42 cover a central zone area 40 extending for substantially the full height of the flap 12, while relatively shallow vertically extending reinforcing ribs 39′ are provided adjacent each side edge 23a, 23b of the panel. In the wider lateral marginal region 36b at the right hand side (as seen in FIGURE 10) of the central zone 40, however, there is provided a second, deeper, vertically extending rib 139 for containing and diverting the bulk of the liquid conducted into this region by the inclined flow channels 78 so that such liquid drains downwardly. Although the vertically extending ribs 39′ and 139 are here shown as projecting forwardly substantially at right angles to the plane of the panel 32, again they may be inclined inwardly if desired. Also, in this case, a group of slightly curved short blades 93, integrally moulded with the base material, may optionally be provided between the deep liquid containment rib 139 and the open ends of the transverse flow channels 78 as indicated in broken lines in FIGURE 10.

In each of the above two modifications, the whole structure is again preferably a unitary structure, including the vertically extending ribs, moulded in one piece from rubber.

The modification illustrated in FIGURES 12 and 13 is similar to that of FIGURES 10 and 11 but in this case a vertical barrier for containing the liquid emerging from the inclined transverse flow channels 78 (at least at the right-hand side of the central zone 40) is provided by a separately formed C-shaped channel section element 110 secured by any suitable means to the base sheet 32. Being located inwardly of the extreme side edges of the panel this channel element 110 is well protected from being easily damaged during use.

In all cases, the sloping or inclined configuration of the transverse ribs or bars 42 across the width of the panel, or the central zone thereof, can be extremely advantageous and, as previously indicated, has surprisingly been found to give significantly better results than equivalent arrangements having ribs or bars extending horizontally, parallel to the top and bottom edges of a mudflap panel, i.e. perpendicular to vertical drainage paths or channels in the side marginal regions. This unexpected advantageous effect of orienting these ribs or bars in the manner described, providing transverse flow channels in which the main flow of liquid appears to be constrained to move "up hill", is believed to be related, as mentioned, to the fa ct that most of the spray flung off the wheels of a travelling vehicle is already moving generally in an upwards direction. It is also somewhat surprising to find that an enhanced performance may be obtained by forming these transverse bars or ribs so that in cross section they also slope outwardly from the surface of the panel in an upwards direction, but this appears to be related to the same fact as is referred to above.

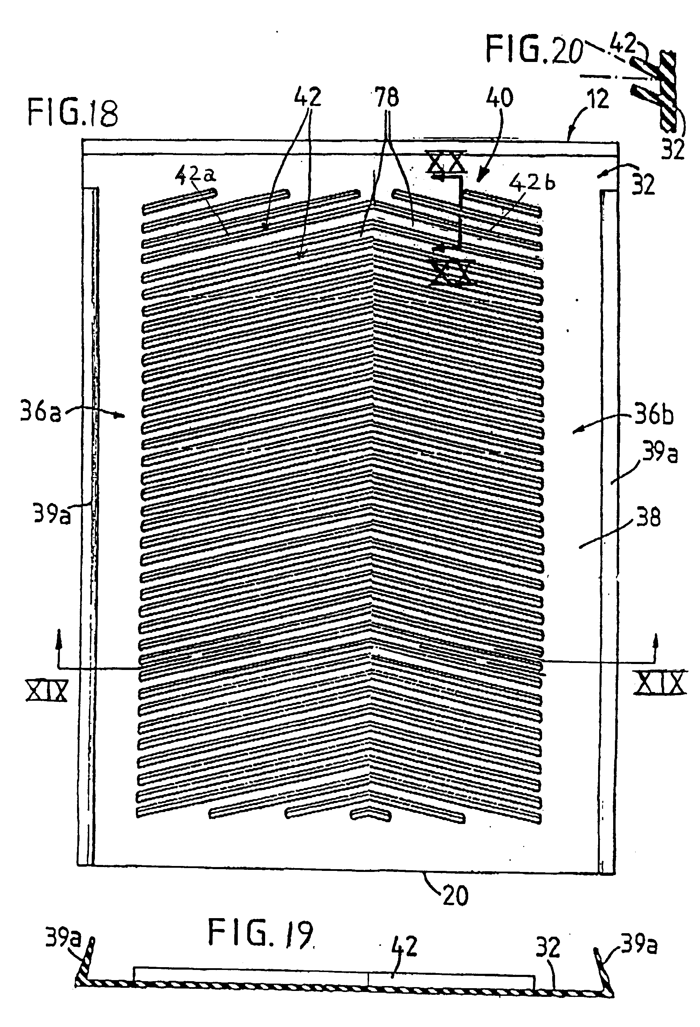

Nevertheless, it is not thought to be essential in all cases for the transverse ribs or bars, and the flow channels defined therebetween, to be straight throughout their entire length and to slope uniformly or progressively upwards across the width of the panel (or central zone thereof), so that as already stated they may include one or more changes in angular direction and bends along their length whereby different sections of the ribs or bars and channels may slope obliquely across the surface of the panel at different angles relative to a horizontal transverse axis of the panel. Thus, the ribs or bars and channels may even have a V-shaped, inverted V-shaped or W-shaped configuration and one example of this is illustrated in the embodiment of FIGURES 18 to 20. This embodiment may be regarded as a modification of the embodiment of FIGURES 7 to 9 and the same reference numerals are used to denote corresponding parts, the principal difference being that the ribs or bars 42 are now of shallow inverted V-shape such that opposite legs or sections 42a, 42b, slope upwards obliquely across the central zone 40 of the panel 32 from opposite sides to define an apex which, in this particular example, is somewhat offset from the centreline of the panel such that there is a certain degree of asymmetry and the ends of the ribs or bars 42 and channels 78 terminate at the right-hand side at a slightly higher level than at the left-hand side. Other features remain as described in connection with the embodiment of FIGURES 7 to 9.

**Claims**

1. Spray suppression material, for use as or in a device (12) fitted to a road vehicle (10) for reducing the production of clouds of spray when travelling at speed on wet road surfaces, comprising a base provided by a panel (32) of planar sheet material having a spray receiving surface (28), that is a surface which in use is presented towards a road wheel (14) of the vehicle (10), said panel (32) being bounded by a top edge (19), a bottom edge (20) and opposite side edges (23a, 23b) and being provided with a series of forwardly projecting parallel ribs or bars (42) which extend in a transverse direction across said surface (28) and define therebetween a series of parallel open-ended transversely extending channels (78) that in use provide passages for liquid or fluid matter from wheel spray impinging on said surface to flow towards said side edges of the panel and into laterally adjacent marginal collecting regions (36a, 36b) from where said liquid or fluid matter can drain away, said ribs or bars (42), and the flow channels (78) defined therebetween, throughout at least a major portion of their length in at least a central zone (40) of the panel (32), sloping obliquely across said surface (28) of the panel (32), and at least one said marginal collecting region (36b) being bounded by a vertical rib (39, 39a) projecting forwardly from the base panel (32) and having a depth greater than the depth of said transversely extending ribs or bars (42) characterised by the following features in combination:

(a) the channels (78) provide clear unobstructed passages for flow of the spray liquid or fluid over the surface of the panel (32) from said central zone (40) towards said marginal collecting regions (36a, 36b)

(b) the transversely extending ribs or bars (42) defining said channels (78) over at least a major portion of their length extend in an upwards sloping direction obliquely across the surface of the panel (32) at an angle within a range of 12° to 17° to a horizontal transverse axis of the panel, and are arranged to direct at least the majority of said liquid or fluid matter from wheel spray impinging on said surface (28) in said central zone (40) to flow upwards to a higher level during its passage along said flow channels (78) to reach a said marginal collecting region (36a, 36b), and

(c) the depth of said vertical rib or ribs (39, 39a) is at least double the depth of said transversely extending ribs or bars (42) so as to form a vertically extending retaining wall or walls presenting a spray suppressing surface effective to contain liquid or fluid matter conveyed along said flow channels (78) into said marginal collecting region (36b) and to direct the flow of such liquid or fluid matter into an adjacent vertically extending drainage path.

2. Spray suppression material as claimed in Claim 1 wherein the panel (32) is provided adjacent both side edges (23a, 23b) with a said vertically extending retaining wall formed by a said forwardly projecting vertical rib (39,39a) bounding the adjacent marginal collecting region (36a,36b), each said vertical rib (39,39a) being inclined inwardly at a substantial angle, about 70°- 75°, to the general plane of the base panel (32).

3. Spray suppression material as claimed in Claim 1 or 2 wherein the or each said vertical rib (39,39a) has a depth which is at least 3 to 4 times greater than the depth of the transversely extending ribs or bars (42).

4. Spray suppression material as claimed in any of Claims 1 to 3 wherein the or each vertically extending rib (39a) is integrally formed with the base panel (32) and tapers in cross-sectional thickness from a root end adjacent said base panel (32) towards a forwardly presented free edge.

5. Spray suppression material as claimed in any of Claims 1 to 4 wherein the transversely extending ribs or bars (42) and flow channels (78) defined therebetween include one or more bends along their length so that different sections (42a, 42b) thereof slope obliquely across the surface (28) of the panel (32) at different angles relative to a horizontal transverse axis of the panel.

6. Spray suppression material as claimed in any of the preceding claims, wherein at least the lower side faces (74) of the transversely extending ribs or bars (42), that is the side faces presented towards the bottom edge (20) of the panel, as viewed in cross-section slope outwards at an angle ($\theta$) away from the perpendicular to the general plane of the base panel in an upwards direction towards the top edge (19) of the panel.

7. Spray suppression material as claimed in Claim 6, wherein the angle ($\theta$) at which said lower side faces (74) of the transverse ribs or bars (42) slope outwards relative to the perpendicular to the general plane of the base panel lies within a range of about 20° to 30°.

8. Spray suppression material as claimed in any of the preceding claims, wherein said ribs or bars (42) and the channels (78) defined therebetween extend obliquely throughout their length in a uniform upwardly slanting or inclined direction towards the top edge (19) of the panel (32) across substantially the entire width of a central zone (40) of said spray-receiving surface (28) of the panel (32), said central zone being located between said marginal collecting regions (36a, 36b).

9. Spray suppression material as claimed in Claim 8, wherein said central zone (40) is offset laterally towards one side edge (23a) of the panel so that the marginal collecting zone (36b) towards the opposite side edge (23b) is wider than the marginal collecting zone (36a) laterally adjacent said first mentioned side edge (23a).

10. Spray suppression material as claimed in Claim 8 or 9, wherein at least part of the area of said surface (28) of the panel (32) around said central zone (40), including at least a major portion of the marginal collecting region (36b) at one side, is provided with a plurality of forwardly projecting protuberances in the form of generally parallel upstanding flexible fingers (46) of which at least the majority are arranged in a pattern consisting of a plurality of diamond shaped rhombic groups (48) disposed in parallel columns or vertical rows (50) to define drainage paths (52) of zig-zag form between said columns or rows.

11. Spray suppression material as claimed in any one of the preceding claims wherein the area (40) which is provided with said transversely extending ribs or bars (42) extends for substantially the full height or depth of the panel (32) between said top and bottom edges (19, 20).

12. Spray suppression material as claimed in any of the preceding claims, wherein said base panel (32) comprises an upper main portion and a lower portion fastened together through a transversely extending joint (200) permitting replacement of said lower portion and facilitating production of panels having a standard width but different overall height or depth.

13. Spray suppression material as claimed in any of the preceding claims, wherein at least some of said transversely extending ribs or bars (42) are interrupted along their length by one or more short gaps permitting communication between adjacent channels.

14. Spray suppression material as claimed in Claim 13, wherein the gapped sections of said ribs or bars (42) are staggered relative to one another in the vertical direction.

15. Spray suppression material as claimed in any of the preceding claims, wherein said transverse fluid flow channels (78) defined between adjacent said transverse ribs or bars (42) have substantially parallel side walls (72, 74) and a base surface (172, 174) which has a substantially convex or inverted V-shape configuration in cross-section defining a shallow forwardly projecting ridge (168) extending over at least a portion of the length of said channels.

16. A vehicle fitted with mudflaps (12) that comprise spray suppression material as claimed in any of the preceding claims, wherein the or each mudflap fitted at the nearside of the vehicle is a mirror image of the mudflap or mudflaps fitted at the offside of the vehicle and in each mudflap (12) the ends of the transversely extending ribs or bars (42) and transverse channels (78) that are presented inwardly of the vehicle terminate at a higher level closer to the top edge (19) of the panel (32) of spray suppression material than the ends of said ribs or bars and transverse channels that are presented outwardly of the vehicle whereby, in use, any liquid or fluid material which flows along the sloping transverse flow channels (78) towards said ends that terminate at the higher level closer to the top edge (19) of the panel (32) and which escapes without being caught and drained downwards through the adjacent marginal collection zone (36b) will tend to be thrown under the vehicle rather than outwards to one side of the vehicle.

## Revendications

1. Matériau supprimant le brouillard projeté, utilisé en tant que dispositif ou dans un dispositif (12) monté sur un véhicule routier (10) pour réduire la production de nuages projetés lors de parcours rapides sur des surfaces de routes mouillées, comportant une base constituée d'un panneau (32) en feuille de matériau plane présentant une surface de réception (28) des projections, c'est-à-dire une surface qui, en fonctionnement, est dirigée vers une roue d'appui (14) du véhicule (10), ledit panneau (32) étant limité par un bord supérieur (19), un bord inférieur (20) et des bords latéraux opposés (23a, 23b) et tant muni d'une série de nervures ou barres parallèles (42) en saillie vers l'avant qui s'étendent en direction transversale sur ladite surface (28) et forment entre elles une série de canaux parallèles (78) à extrémité ouverte et s'étendant transversalement qui, en fonctionnement, constituent des passages pour les matières liquides ou fluides provenant des projections dues aux roues et arrivant sur ladite surface, en assurant l'écoulement vers lesdits bords latéraux du panneau et dans des régions collectrices de bordure (36a, 36b) adjacentes en direction latérale, à partir desquelles lesdites matières liquides ou fluides peuvent s'écouler, lesdites nervures ou barres (42) ainsi que les canaux d'écoulement (78) formés entre elles étant inclinés obliquement sur ladite surface (28) du panneau (32) sur au moins la plus grande partie de leur longueur, dans au moins une zone centrale (40) du panneau (32) et au moins l'une (36b) desdites régions collectrices de bordure étant limitée par une nervure verticale (39, 39a) en saillie vers l'avant sur le panneau de base (32) et ayant une profondeur supérieure à la profondeur desdites nervures ou barres (42) s'étendant transversalement, caractérisé par les caractéristiques suivantes en combinaison :

a) les canaux (78) constituent des passages libres, sans obstacles, pour l'écoulement du liquide ou fluide de projection sur la surface du panneau (32), à partir de ladite zone centrale (40) vers lesdites régions collectrices de bordure (36a, 36b),

b) les nervures ou barres (42) s'étendant transversalement et formant lesdits canaux (78) s'étendent sur au moins la plus grande partie des leur longueur, dans une direction inclinée ascendante obliquement sur la surface du panneau (32), suivant un angle compris entre 12° et 17° avec l'axe horizontal transversal du panneau, et elles sont disposées pour diriger au moins la plus grande partie desdites matières liquides ou fluides provenant des projections dues à la roue arrivant sur ladite surface (28) dans ladite zone centrale (40) pour qu'elles s'écoulent vers le haut à un niveau plus élevé pendant leur passage dans lesdits canaux d'écoulement (78) pour atteindre l'une desdites régions collectrices de bordure (36a, 36b), et

c) la profondeur de ladite ou desdites nervures verticales (39, 39a) est au moins égale au double de la profondeur desdites nervures ou barres s'étendant transversalement (42), de manière à former une paroi ou des parois de retenue s'étendant verticalement et présentant une surface d'arrêt des projections capable de contenir les matières liquides ou fluides transportées par lesdits canaux d'écoulement (78) dans ladite région collectrice de bordure (36b) et de diriger l'écoulement des ces matières liquides ou fluides suivant un trajet d'évacuation adjacent s'étendant verticalement.

2. Matériau supprimant le brouillard projeté selon la revendication 1, dans lequel le panneau (32) est muni suivant ses deux bords latéraux (23a, 23b) d'une desdites parois de retenue s'étendant verticalement formée par l'une desdites nervures verticales en saillie vers l'avant (39, 39a) limitant la région collectrice de bordure adjacente (36a, 36b), chacune desdites nervures verticales (39, 39a) étant inclinée vers l'intérieur d'un angle important de 70° à 75° environ, sur le plan d'ensemble du panneau de base (32).

3. Matériau supprimant le brouillard projeté selon la revendication 1 ou 2, dans lequel la ou chaque nervure verticale (39, 39a) a une profondeur qui est au moins 3 à 4 fois plus grande que la profondeur des nervures ou barres (42) s'étendant transversalement.

4. Matériau supprimant le brouillard projeté selon l'une quelconque des revendications 1 à 3, dans lequel la ou chaque nervure s'étendant transversalement (39a) est constituée en une seule pièce avec le panneau de base (32) et présente en section transversale une épaisseur qui diminue depuis une extrémité d'enracinement adjacente audit panneau de base (32) vers un bord libre situé en avant.

5. Matériau supprimant le brouillard projeté selon l'une quelconque des revendications 1 à 4, dans lequel les nervures ou barres (42) s'étendant transversalement et les canaux d'écoulement (78) formés entre elles présentent un ou plusieurs coudes sur leur longueur, de sorte que différents tronçons correspondants (42a, 42b) sont inclinés obliquement sur la surface (28) du panneau (32) suivant des angles différents par rapport à l'axe horizontal transversal du panneau.

6. Matériau supprimant le brouillard projeté selon l'une quelconque des revendications précédentes, dans lequel au moins les surfaces latérales inférieures (74) des nervures ou barres (42) s'étendant transversalement, c'est-à-dire les surfaces latérales dirigées vers le bord inférieur (20) du panneau, considérées en section transversale, sont inclinées vers l'extérieur d'un angle ($\theta$) sur la perpendiculaire au plan général du panneau de base suivant une direction allant en montant vers le bord supérieur (19) du panneau.

7. Matériau supprimant le brouillard projeté selon la revendication 6, dans lequel l'angle ($\theta$) suivant lequel lesdites surfaces latérales inférieures (74) des nervures ou barres transversales (42) sont inclinées vers l'extérieur sur la perpendiculaire au plan général du panneau de base est compris dans une gamme allant approximativement de 20° à 30°.

8. Matériau supprimant le brouillard projeté selon l'une quelconque des revendications précédentes, dans lequel lesdites nervures ou barres (42) et les canaux (78) formés entre elles s'étendent obliquement sur toute leur longueur suivant une direction oblique ou inclinée en montant de façon uniforme vers le bord supérieur (19) du panneau (32), essentiellement sur toute la largeur d'une zone centrale (40) de la surface de réception (28) des projections sur le panneau (32) ladite zone centrale étant située entre lesdites régions collectrices de bordure (36a, 36b).

9. Matériau supprimant le brouillard projeté selon la revendication 8, dans lequel ladite zone centrale (40) est décalée latéralement vers un bord latéral (23a) du panneau, de sorte que la région collectrice de bordure (36b) située vers le bord opposé (23b) est plus large que la région collectrice de bordure (36a) adjacente audit bord latéral (23a) mentionné en premier lieu.

10. Matériau supprimant le brouillard projeté selon la revendications 8 ou 9, dans lequel au moins une partie de l'aire de ladite surface (28) du panneau (32) située autour de ladite zone centrale (40), y compris au moins la plus grande partie de la région collectrice de bordure (36b) d'un côté, est munie d'une pluralité de protubérances en saillie vers l'avant se présentant sous forme de doigts flexibles montants (46) sensiblement parallèles, au moins la plus grande partie de ces doigts étant disposés suivant un tracé constitué de plusieurs ensembles rhombiformes en losanges (48) disposés en colonnes parallèles ou en rangées verticales (50) pour constituer des trajets d'écoulement (52) en forme de zig-zag entre lesdites colonnes ou rangées.

11. Matériau supprimant le brouillard projeté selon l'une quelconque des revendications précédentes, dans lequel la zone (40) qui est munie desdites nervures ou barres (42) s'étendant transversalement s'étend sensiblement sur toute la hauteur ou profondeur du panneau (32) entre lesdits bords supérieur et inférieur (19, 20).

12. Matériau supprimant le brouillard projeté selon l'une quelconque des revendications précédentes, dans lequel ledit panneau de base (32) comporte une partie principale supérieure et une partie inférieure assemblées par un joint (200) s'étendant transversalement et permettant le remplacement de ladite partie inférieure, ce qui facilite la fabrication de panneaux ayant une largeur standard mais des hauteurs ou profondeurs totales différentes.

13. Matériau supprimant le brouillard projeté selon l'une quelconque des revendications précédentes, dans lequel au moins certaines desdites nervures ou barres (42) s'étendant transversalement sont interrompues dans le cours de leur longueur par un ou plusieurs intervalles courts permettant une communication entre des canaux adjacents.

14. Matériau supprimant le brouillard projeté selon la revendication 13, dans lequel les tronçons interrompus desdites nervures ou barres (42) sont étagés les uns par rapport aux autres en direction verticale.

15. Matériau supprimant le brouillard projeté selon l'une quelconque des revendications précédentes, dans lequel lesdits canaux (78) d'écoulement transversal de fluide formés entre lesdites nervures ou barres adjacentes (42) s'étendant transversalement ont des parois latérales (72, 74) sensiblement parallèles et une surface de base (172, 174) ayant, en section transversale, une configuration essentiellement convexe ou en forme de V renversé qui constitue une crête (168) à faible profondeur en saillie vers l'avant qui s'étend sur au moins une partie de la longueur desdits canaux.

16. Véhicule équipé de bavettes (12) comportant le matériau supprimant le brouillard projeté selon l'une quelconque des revendications précédentes, dans lequel la ou chaque bavette montée à l'arrière du véhicule est l'image dans un miroir de la bavette ou des bavettes montées à l'extérieur du véhicule et, dans chaque bavette (12), les extrémités des nervures ou barres (42) s'étendent transversalement et des canaux transversaux (78) dirigés vers l'intérieur du véhicule aboutissent à un niveau plus élevé, plus près du bord supérieur (19) du panneau (32) de matériau supprimant le brouillard projeté, que les extrémités desdites nervures ou barres et des canaux transversaux dirigés vers l'extérieur du véhicule, d'où il résulte qu'en fonctionnement, toutes les matières liquides ou fluides qui s'écoulent dans les conduits d'écoulement transversaux inclinés vers lesdites extrémités aboutissant à un niveau plus élevé, plus près du bord supérieur (19) du panneau (32), et qui s'échappent sans être captées et drainées vers le bas par la région collectrice de bordure adjacente (36b), tendent a être projetées sous le véhicule plutôt que vers l'extérieur, d'un côté du véhicule.

**Patentansprüche**

1. Sprühnebelunterdrückungsmaterial zur Verwendung als oder in einer Vorrichtung (12), die an einem Straßenfahrzeug (10) angeordnet ist, zur Verminderung der Erzeugung von Wolken aus Sprühnebel beim schnellen Fahren auf nassen Straßenoberflächen, mit einer Basis, die durch eine Platte (32) aus ebenem Blattmaterial gebildet ist, welche eine sprühnebelaufnehmende Oberfläche (28) besitzt, nämlich eine Oberfläche, die im Gebrauch dem auf der Straße aufliegenden Rad (14) des Fahrzeugs (10) zugewandt ist, wobei die besagte Platte (32) von einer Oberkante (19), einer Unterkante (20) und einander gegenüberliegenden Seitenkanten (23a, 23b) begrenzt ist und mit einer Reihe von nach vorne herausragenden parallel verlaufenden Rippen oder Lamellen (42) versehen ist, die sich in Querrichtung über die besagte Oberfläche (28) erstrecken und zwischen sich eine Reihe von parallelen, sich in Querrichtung erstreckenden Kanälen (78) mit offenen Enden definieren, welche im Gebrauch Durchlässe für die Flüssigkeit oder das flüssige Material des Radsprühnebels bilden, der auf die besagte Oberfläche auftrifft, um dann in Richtung auf die besagten Seitenkanten der Platte und in seitlich angrenzende Randsammelbereiche (36a, 36b) zu fließen, von wo aus die besagte Flüssigkeit oder das flüssige Material abfließen kann, wobei die besagten Rippen oder Lamellen (42) und die zwischen ihnen auf mindestens einem Hauptanteil ihrer Länge mindestens in einer zentralen Zone (40) der Platte (32) gebildeten Durchflußkanäle (78) schräg über die besagte Oberfläche (28) der Platte (32) verlaufen und mindestens einer der besagten Randsammelbereiche (36b) von einer vertikal verlaufenden Rippe (39, 39a) begrenzt ist, die aus der Basisplatte (32) nach vorne herausragt und eine Höhe besitzt, die größer ist als die Höhe der besagten, sich in Querrichtung erstreckenden Rippen oder Lamellen (42), gekennzeichnet durch die Kombination folgender Merkmale:

(a) Die Kanäle (78) bilden freie unbehinderte Durchlässe für den Durchfluß der Flüssigkeit oder des flüssigen Materials des Sprühnebels über die Oberfläche der Platte (32) von der besagten zentralen Zone (40) zu den besagten Randsammelbereichen (36a, 36b) hin;

(b) die sich in Querrichtung erstreckenden Rippen oder Lamellen (42), welche auf mindestens einem Hauptantail ihrer Länge die besagten Kanäle (78) definieren, erstrecken sich in einer aufwärts geneigten Richtung schräg über die Oberfläche der Platte (32) unter einem Winkel im Bereich von 12° bis 17° zu einer horizontalen Querachse der Platte und sind so angeordnet, daß sie mindestens den Hauptanteil der besagten Flüssigkeit oder des flüssigen Materials des auf die besagte Oberfläche in der besagten zentralen Zone (40) auftreffenden Radsprühnebels so ausrichten, daß er während seines Durchflusses entlang der besagten Durchflußkanäle (78) aufwärts auf ein höheres Niveau strömt, bis er einen der besagten Randsammelbereiche (36a, 36b) erreicht;

(c) die Höhe der besagten vertikal verlaufenden Rippe oder der Rippen (39, 39a) ist mindestens doppelt so groß wie die Höhe der besagten, sich in Querrichtung erstreckenden Rippen oder Lamellen (42), so daß eine vertikal verlaufende Rückhaltewand oder Rückhaltewände gebildet werden, die eine sprühnebelunterdrückende Oberfläche besitzt, welche dahingehend wirksam ist, Flüssigkeit oder flüssiges Material, die bzw. das entlang der besagten Durchflußkanäle (78) in die besagten Randsammelbereiche (36 b) gefördert wurde, aufzunehmen und den Fluß dieser Flüssigkeit oder des flüssigen Materials in einen angrenzenden, sich in vertikaler Richtung erstreckenden Abflußweg zu leiten.

2. Sprühnebelunterdrückungsmaterial nach Anspruch 1, bei dem die Platte (32) angrenzend an beide Seitenkanten (23a, 23b) mit einer besagten, sich in vertikaler Richtung erstreckenden Rückhaltewand versehen ist, die aus einer besagten nach vorne herausragenden, vertikal verlaufenden Rippe (39, 39a) gebildet ist, welche den angrenzenden Randsammelbereich (36a, 36b) begrenzt, wobei jede der besagten vertikal verlaufenden Rippen (39, 39a) um einen Winkel von im wesentlichen 70° - 75° zur allgemeinen Ebene der Basisplatte (32) nach innen geneigt ist.

3. Sprühnebelunterdrückungsmaterial nach Anspruch 1 oder 2, bei dem die oder jede besagte, vertikal verlaufende Rippe (39, 39a) eine Höhe besitzt, die mindestens 3 - 4 mal größer ist als die Höhe der sich in Querrichtung erstreckenden Rippen oder Lamellen (42).

4. Sprühnebelunterdrückungsmaterial nach einem der Ansprüche 1 - 3, bei dem die oder jede vertikal verlaufende Rippe (39a) integral mit der Basisplatte (32) geformt ist und sich in der Querschnittsdicke von einem an die besagte Basisplatte (32) angrenzenden Fußende zu einem nach vorne weisenden freien Ende hin verjüngt.

5. Sprühnebelunterdrückungsmaterial nach einem der Ansprüche 1 - 4, bei dem die sich in Querrichtung erstreckenden Rippen oder Lamellen (42) und die zwischen ihnen gebildeten Durchflußkanäle (78) entlang ihrer Länge eine oder mehrere Krümmungen aufweisen, so daß verschiedene Abschnitte (42a, 42b) von ihnen auf der Oberfläche (28) der Platte (32) unter unterschiedlichen Winkeln in Bezug auf eine horizontale Querachse der Platte geneigt angeordnet sind.

6. Sprühnebelunterdrückungsmaterial nach einem der vorhergehenden Ansprüche, bei dem mindestens die unteren Seitenflächen (74) der sich in Querrichtung erstreckenden Rippen oder Lamellen (42), nämlich die der Unterkante (20) der Platte zugekehrten Seitenflächen, im Querschnitt betrachtet unter einem Winkel ($\theta$) von der Senkrechten auf die allgemeine Ebene der Basisplatte weg nach außen in einer Richtung aufwärts zur Oberkante (19) der Platte hin geneigt angeordnet sind.

7. Sprühnebelunterdrückungsmaterial nach Anspruch 6, bei dem der Winkel ($\theta$), unter dem die besagten unteren Seitenflächen (74) der sich in Querrichtung erstreckenden Rippen oder Lamellen (42) in Bezug zur Senkrechten auf die allgemeine Ebene der Basisplatte nach außen geneigt angeordnet sind, in einem Bereich von etwa 20° bis 30° liegt.

8. Sprühnebelunterdrückungsmaterial nach einem der vorhergehenden Ansprüche, bei dem die besagten Rippen oder Lamellen (42) und die zwischen ihnen gebildeten Kanäle (78) sich auf ihrer Länge in einer gleichmäßig aufwärts schrägen oder geneigten Richtung über im wesentlichen die ganze Breite einer zentralen Zone (40) der besagten sprühnebelaufnehmenden Oberfläche (28) der Platte (2) zur Oberkante (19) der Platte (32) hin erstrecken, wobei die besagte zentrale Zone zwischen den besagten Randsammelbereichen (36a, 36b) angeordnet ist.

9. Sprühnebelunterdrückungsmaterial nach Anspruch 8, bei dem die besagte zentrale Zone (40) zu einer Seitenkante (23a) der Platte hin seitlich versetzt angeordnet ist, so daß die Randsammelzone (36b) an der gegenüberliegenden Seitenkante (23b) breiter ist als die Randsammelzone (36a), die an die besagte zuerst erwähnte Seitenkante (23a) angrenzt.

10. Sprühnebelunterdrückungsmaterial nach Anspruch 8 oder 9, bei dem mindestens ein Teil der Fläche der besagten Oberfläche (28) der Platte (32) um die besagte zentrale Zone (40) herum, welche mindestens einen Hauptanteil des Randsammelbereichs (36b) an einer Seite umfaßt, mit einer Vielzahl von nach vorne herausragenden Vorsprüngen in Form von allgemein parallel zueinander aufrecht stehenden flexiblen Fingern (46) versehen ist, von denen mindestens die Mehrheit in einem Muster angeordnet ist, das aus einer Vielzahl von diamantartig rombischen Gruppen (48) besteht, die in parallelen Kolonnen oder vertikalen Reihen (50) angeordnet sind, zur Bildung von Abflußwegen (52) in zick-zack-Form zwischen den besagten Kolonnen oder Reihen.

11. Sprühnebelunterdrückungsmaterial nach einem der vorhergehenden Ansprüche, bei dem die Fläche (40), die mit den besagten sich in Querrichtung erstreckenden Rippen oder Lamellen (42) versehen ist, sich im wesentlichen über die gesamte Höhe oder Tiefe der Platte (32) zwischen der besagten Ober- und Unterkante (19, 20) erstreckt.

12. Sprühnebelunterdrückungsmaterial nach einem der vorhergehenden Ansprüche, bei dem die besagte Basisplatte (32) einen oberen Hauptteil und ein Unterteil umfaßt, die mittels einer sich in Querrichtung erstreckenden Verbindungsvorrichtung (200), welche ein Auswechseln des besagten Unterteils erlaubt und die Herstellung von Platten mit einer Standardbreite aber unterschiedlicher Gesamthöhe oder -Tiefe erleichtert, aneinander befestigt sind.

13. Sprühnebelunterdrückungsmaterial nach einem der vorhergehenden Ansprüche, bei dem mindestens einige der sich in Querrichtung erstreckenden Rippen oder Lamellen (42) auf ihrer Länge durch eine oder mehrere kurze Lücken unterbrochen sind, welche die Verbindung zwischen benachbarten Kanälen ermöglichen.

14. Sprühnebelunterdrückungsmaterial nach Anspruch 13, bei dem die unterbrochenen Abschnitte der besagten Rippen oder Lamellen (42) in vertikaler Richtung gegeneinander versetzt angeordnet sind.

15. Sprühnebelunterdrückungsmaterial nach einem der vorhergehenden Ansprüche, bei dem die zwischen den besagten aneinander angrenzenden, sich in Querrichtung erstreckenden Rippen oder Lamellen (42) gebildeten, sich in Querrichtung erstreckenden besagten Durchflußkanäle (78) im wesentlichen parallele Seitenwände (72, 74) aufweisen sowie eine Basisfläche (172, 174), die im Querschnitt eine im wesentlichen konvexe oder umgekehrt V-förmige Gestalt besitzt, zur Bildung eines flachen nach vorne vorspringenden Rückens (168), der sich über mindestens einen Teil der Länge der besagten Kanäle erstreckt.

16. Ein Fahrzeug, das mit Schmutzfängern (12) ausgerüstet ist, die Sprühnebelunterdrückungsmaterial nach einem der vorhergehenden Ansprüche aufweisen, wobei der oder jeder Schmutzfänger, der an der Beifahrerseite des Fahrzeugs angeordnet ist, ein Spiegelbild des oder der Schmutzfänger darstellt, die an der Fahrerseite des Fahrzeugs angeordnet sind, und in jedem Schmutzfänger (12) die dem Inneren des Fahrzeugs zugewandten Enden der sich in Querrichtung erstreckenden Rippen oder Lamellen (42) und der sich in Querrichtung erstreckenden Kanäle (78) auf einem höheren Niveau, näher an der Oberkante (19) der Platte (32) aus Sprühnebelunterdrückungsmaterial, auslaufen als die Enden der besagten Rippen oder Lamellen und der in Querrichtung verlaufenden Kanäle, die dem Äußeren des Fahrzeugs zugewandt sind, wobei im Gebrauch alle Flüssigkeit oder alles flüssige Material, die bzw. das entlang der geneigten in Querrichtung verlaufenden Durchflußkanäle (78) in Richtung auf die besagten Enden fließt, welche auf dem höheren Niveau, näher an der Oberkante (19) der Platte (32), auslaufen, und die bzw. das ausfließt, ohne aufgefangen und durch die angrenzende Randsammelzone (36b) nach unten abgeleitet zu werden, die Tendenz besitzt, eher unter das Fahrzeug als nach außen zu einer Seite des Fahrzeugs hin abgeschleudert zu werden.

FIG.1.

FIG.3.

FIG.4.

FIG.5.

FIG.6.

FIG.17.

FIG.2.

FIG.7.

FIG.8.

FIG.9.

FIG.10.

FIG. 11.

FIG. 13.

FIG. 14.

FIG. 16.

FIG. 15.

# FIG.12.

FIG.18

FIG.20

FIG.19